# EUROPEAN PATENT APPLICATION

(11) **EP 1 304 873 A1**
(43) Date of publication of application: **23.04.2003**
(21) Application number: 02256700.2
(22) Date of filing: 26.09.2002
(51) Int. Cl.: H04N 5/44

(54) **Television card for a computer**

(30) Priority: 09.10.2001 KR 2001062206
(71) Applicant: SAMSUNG ELECTRONICS CO., LTD., Suwon-City, Kyungki-do (KR)
(72) Inventor: Lee, Kwang-yong, c/o Siyoung Apt., No. 56-103, Seoul City (KR)
(74) Representative: Geary, Stuart Lloyd

(57) **Abstract**

A main portion of a television card includes a front end and an IF filter section. A subsidiary portion contains a demodulator and a memory storing control and configuration data for the front end and the IF filter section. During manufacturing, the same main portion design is used with different subsidiary portions to provide television cards for different television standards.

## Description

The present invention relates to television card for a computer comprising a front end and a television signal demodulator and to a method of manufacturing two television cards for computers.

Broadcast signal receiving cards are employed to enable computers to receive broadcast signals.

Most of broadcast signal receiving cards have the same configuration, regardless of whether they receive analogue or digital signals. Typically a broadcast signal receiving card comprises a tuner, an IF (Intermediate Frequency) section, a demodulator and a decoder for decoding the demodulated signal to produce baseband video and audio signals.

There are various methods for reproducing the broadcast signal. Most commonly, the broadcast signal receiving card is plugged into a PCI (peripheral component interface) bus socket of a personal computer. Digital video signals are transferred from the broadcast receiving card to the memory of a graphic card via the PCI bus.

Device drivers provide a software link between the core of the computer's operating system and the hardware of peripherals such as broadcast signal receiving cards and graphics cards. Device drivers for broadcast signal receiving cards drive broadcast signal receiving cards to output digital video and audio signal via the PCI bus to graphics and sound cards respectively.

Recently, broadcast signal receiving cards for digital broadcasts have being developed. Digital television standards that have been developed include ATSC (Advanced Television Standard Ccommittee) chosen for North America and DVB (Digital Video Broadcast) adopted in Europe. The ATSC and DVB standards differ significantly. Therefore, a computer system must have a broadcast signal receiving cards comprising a demodulator and a decoder suitable for the local system.

A television card according to the present invention is characterised in that the front end is located on a main portion and the demodulator is comprised in a subsidiary portion mounted to the main portion.

Preferably, the demodulator is a digital television signal demodulator.

Preferably, a memory is comprised in the subsidiary portion and stores control data for the control of the front end.

Preferably, there is an IF filter section on the main portion and the memory stores configuration data for configuring the IF filter section.

According to the present invention, there is provided a system comprising a computer having a card according to according to the present invention and a television card driver program installed on the computer, wherein the driver program comprises codes for causing the computer to read said control data from said memory and control said front end in dependence on said read control data.

According to the present invention, there is provided a system comprising a computer having a card according to the present invention and a television card driver program installed on the computer, wherein the driver program comprises codes for causing the computer to read said control data and said configuration data from said memory and control said front end in dependence on said read control data and configure said IF filter section in dependence on the read configuration data.

A method of manufacturing two television cards according to the present invention is characterised by mounting a first subsidiary portion to a first main portion including a front end circuit and mounting a second subsidiary portion to a second main portion having a front end circuit, wherein the main portions are identical and the first and second subsidiary portions comprise respective television signal demodulators for first and second television standards.

Preferably, the first subsidiary portion includes a first memory, storing control data for the control of the front end of the first main portion for receiving signals according to the first television standard, and the second subsidiary portions includes a second memory, storing control data for the control of the front end of the second main portion for receiving signals according to the second television standard.

Preferably, the main portions include respective an IF filter sections, the first memory stores configuration data for configuring the IF filter section of the first main portion for reception of signals according to the first television standard and the second memory stores configuration data for configuring the IF filter section of the second main portion for reception of signals according to the second television standard.

Preferably, the first and second television standards are digital televisions standards.

An embodiment of the present invention will now be described, by way of example, with reference to the accompanying drawings, in which:
Figure 1 is a block diagram of a digital broadcast signal processing system;
Figure 2 is a block diagram of a broadcast signal receiving card according to the present invention;
Figure 3 is a control block diagram of the broadcast signal receiving card of Figure 2; and
Figure 4 is a flow chart showing an operation of a digital broadcast signal processing system having the broadcast signal receiving card of Figure 2.

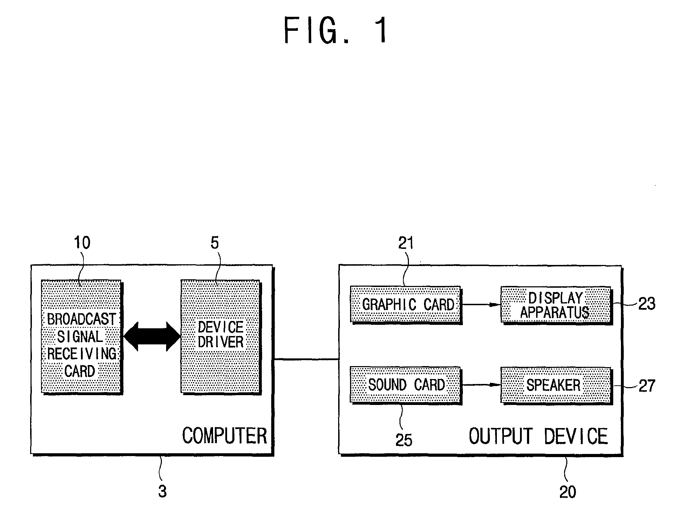

Referring to Figure 1, a digital broadcast signal reproducing system comprises a computer 3 and an output device 20 for outputting audio and video signals so that they can be perceived by a user. The output device 21 may comprise one or more cards housed in the computer 3.

The computer 3 includes a broadcast signal receiving card 10 for receiving digital broadcast signals and is programmed with a device driver 5 for controlling the broadcast signal receiving card 10.

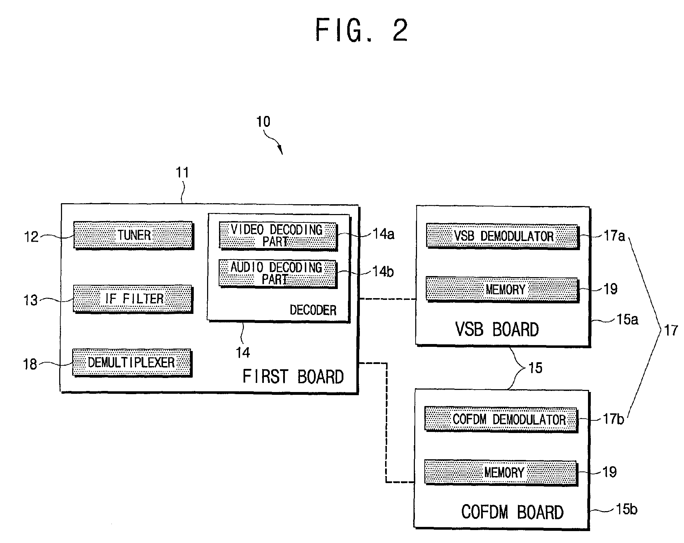

Referring to Figure 2, the broadcast signal receiving card 10 comprises a first board 11 and a second board 15 having a demodulator 17. The second board 15 is one of a group of interchangeable boards adapted to different digital broadcast standards.

The first board 11 contains a front end 12 for receiving broadcast signals in selected channels, an IF filter section 13 for filtering the IF signal output by the front end, a demultiplexer 18 demultiplexing the signal, output by a demodulator 17 on the second board 15, into separate video and audio signals, and a decoder 14 for decoding the separate video and audio signals. The decoder 14 has a video decoding part 14a for decoding MPEG-2 compressed video signals and an audio decoding part 14b for decoding an AC-3 compressed audio signals.

The second board 15 contains the aforementioned demodulator 17 for demodulating digital broadcast signals from the IF filter section 13 and a memory 19 storing control information related to the broadcasting mode. The memory 19 is comprised of an EEPROM (electrically erasable read-only memory).

Figure 2 shows two examples of boards 15a, 15b suitable for the role of the second board 15. The first example board is a VSB (vestigial sideband) board 15a having a VSB demodulator 17a for demodulating ATSC broadcast signals and the second example is a COFDM (Coded Orthogonal Frequency Division Multiplex) board 15b having a COFDM demodulator 17b for demodulating DVB broadcast signals. In the memory 19 for the VSB board 15a is stored information for controlling the VSB demodulator 17a for demodulating ATSC broadcast signals and in the memory 19 of the COFDM board 15b is stored information for controlling the COFDM demodulator 17b for demodulating a DVB broadcast signals.

The first board 11 can be selectively combined with either the VSB board 15a for the ATSC mode in North America or the COFDM board 15b for the DVB mode in Europe.

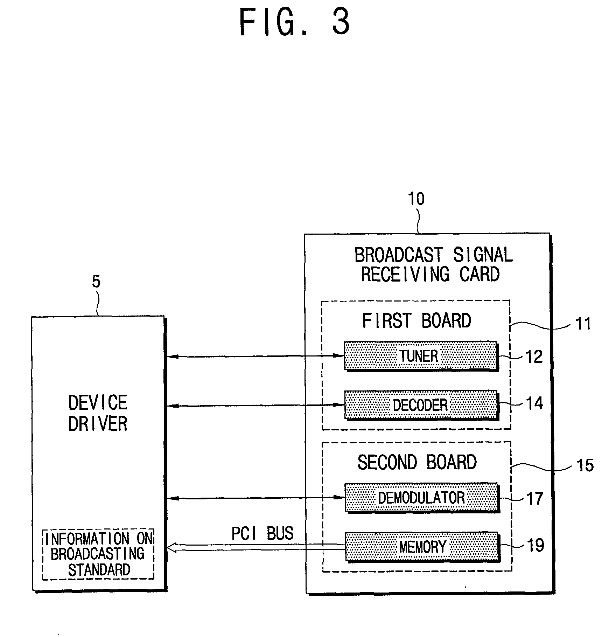

Referring to Figure 3, to control the broadcast signal receiving card 10, the device driver 5 communicates with the broadcast signal receiving card 10 through the computer's PCI bus. The device driver 5 detects the broadcasting mode by reading information from the memory 19 and then determines which type of board is employed as the second board 15 of the broadcast signal receiving card 10. Furthermore, the device driver 5 controls the front end 12, the IF filter section 13, the demodulator 17 and the decoder 14 on the basis of the type of the second board 15 employed.

In accordance with data stored in the memory 19, the device driver 5 set the centre frequency and bandwidth of the IF filter section 13, and sets up the band and channel spacing for tuning the front end 12.

The output device 20 includes a display apparatus 23 for outputting the video signal and a speaker 27 for outputting the audio signal. The computer 3 includes graphics and sound cards 21, 25 for outputting the video and audio signals to the display apparatus 23 and the speaker 27.

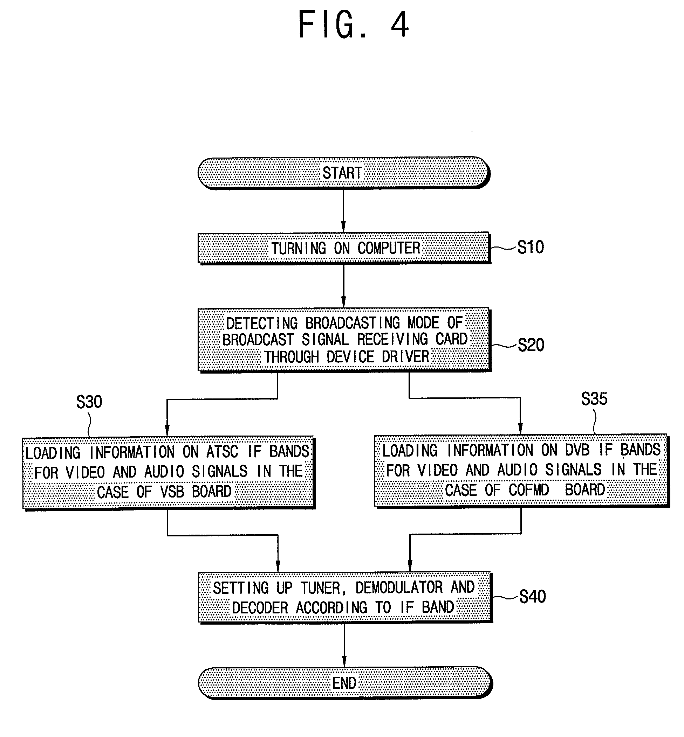

The process of reproducing a digital broadcast signal using the digital broadcast reproducing system will now be described, referring to Figure 4.

First, electric power is supplied to the computer 3 (S10), and the device driver 5 loads the information stored in the memory 19 of the broadcast signal receiving card 10 through the PCI bus and determines which broadcasting mode the broadcast signal receiving card 10 is adapted for, under the control of the computer's operating system (S20).

If the VSB board 15a is employed as the second board 15, the device driver 5 sets up the sets the centre frequency and bandwidth of the IF filter section in accordance with ATSC requirements (S30). Then, the device driver 5 sets up the front end 12 so as to tune ATSC channels (S40).

If the COFDM board 15b is employed as the second board 15, the device driver 5 sets up the sets the centre frequency and bandwidth of the IF filter section in accordance with DVB requirements (S30). Then, the device driver 5 sets up the front end 12 so as to tune DVB channels (S40).

When the setting is complete, the digital broadcast signal receiving card 10 processes a broadcast signal according to the broadcasting mode of the second card.

As described above, in the digital broadcast signal reproducing system according to the present invention, the broadcast signal receiving card 10 comprises the first board 11 having the front end 12 and the decoder 14, and the second board 15 having the demodulator 17 and the memory 19. The second board is manufactured according to the VSB broadcasting mode, the COFDM broadcasting mode or some other mode. Therefore, contrary to the conventional broadcast signal receiving card, without replacing the broadcast signal receiving card 10 with a new one, the first board 11 thereof is commonly used and only the second board 15 thereof is changed when the broadcasting mode is changed. Consequently, the manufacturing cost and efforts thereof is required when only the second board 15 is changed.

As described above, the present invention provides a digital broadcast signal reproducing system and method, which is economical for a manufacturer and a consumer because only a part thereof depending upon a broadcasting system is changed.

## Claims

1. A television card for a computer comprising a front end (12) and a television signal demodulator (17a, 17b), **characterised in that** the front end (12) is located on a main portion (11) and the demodulator (17a, 17b) is comprised in a subsidiary portion (17) mounted to the main portion (11).

2. A television card according to claim 1, wherein the demodulator (17a, 17b) is a digital television signal demodulator.

3. A television card according to claim 1 or 2, including a memory (19) comprised in the subsidiary portion (17) and storing control data for the control of the front end (12).

4. A television card according to claim 3, including an IF filter section (13) on the main portion (11), wherein the memory (19) stores configuration data for configuring the IF filter section (13).

5. A system comprising a computer having a card (10) according to claim 3 and a television card driver program (5) installed on the computer, wherein the driver program (5) comprises codes for causing the computer to read said control data from said memory (19) and control said front end (12) in dependence on said read control data.

6. A system comprising a computer having a card (10) according to claim 4 and a television card driver program (5) installed on the computer, wherein the driver program (5) comprises codes for causing the computer to read said control data and said configuration data from said memory (19) and control said front end (12) in dependence on said read control data and configure said IF filter section (13) in dependence on the read configuration data.

7. A method of manufacturing two television cards (10) for computers, the method being **characterised by** mounting a first subsidiary portion (17) to a first main portion (11) including a front end circuit (12), and mounting a second subsidiary portion (17) to a second main portion (11) having a front end circuit (12), wherein the main portions (11) are identical and the first and second subsidiary portions (17) comprise respective television signal demodulators (17a, 17b) for first and second television standards.

8. A method according to claim 6, wherein the first subsidiary portion (17) includes a first memory (19), storing control data for the control of the front end (12) of the first main portion (11) for receiving signals according to the first television standard, and the second subsidiary portions (17) includes a second memory (19), storing control data for the control of the front end (12) of the second main portion (11) for receiving signals according to the second television standard.

9. A method according to claim 7, wherein the main portions (11) include respective an IF filter sections (13), the first memory (19) stores configuration data for configuring the IF filter section (13) of the first main portion (11) for reception of signals according to the first television standard and the second memory (19) stores configuration data for configuring the IF filter section (13) of the second main portion (11) for reception of signals according to the second television standard.

10. A method according to claim 7, 8 or 9, wherein the first and second television standards are digital televisions standards.

11. A digital broadcast signal reproducing system comprising:
a first board having a tuner receiving a digital broadcast signal;
a second board removably combined to the first board, and having a demodulator demodulating the digital broadcast signal into an analog signal and a memory storing information on a broadcasting mode therein; and
a device driver controlling the tuner, the demodulator, and various chip sets according to the information on the broadcasting mode stored in the memory.

12. The digital broadcast signal reproducing system according to claim 11, wherein the device driver has information on an IF band standard according to the broadcasting mode, and sets up a frequency band of a broadcast signal to be tuned by the tuner, a frequency band of the broadcast signal to be demodulated by the demodulator, and frequency bands of video and audio signals decoded by the decoder on the basis of the IF band standard according to the broadcasting mode.

13. A method of reproducing a digital broadcast signal through a computer, said computer comprising a first board having a tuner receiving the digital broadcast signal to the computer; and a second board having a demodulator demodulating the digital broadcast signal from the tuner into an analog signal and a memory storing information on a broadcasting mode therein to the first board, comprising the steps of loading information on a broadcasting mode stored in the memory; and
setting up the tuner, the demodulator, and various chip sets according to according to the information on the broadcasting mode stored in the memory.

14. The method according to claim 13, wherein the setting step includes the steps of:
setting up a frequency band of the broadcast signal to be tuned by the tuner;
setting up a frequency band of the broadcast signal to be demodulated by the demodulator; and
setting up a frequency bands of video and audio signals to be decoded by the decoder.

15. A digital broadcast signal receiving device comprising a first board having a tuner receiving a digital broadcast signal, a second board removably combined to the first board and having a demodulator demodulating the digital broadcast signal into an analog signal and a memory storing information on a broadcasting mode therein.

16. The digital broadcast signal receiving device according to claim 15, wherein the information on the broadcasting mode stored in the memory contains the name of a country transmitting a digital broadcast signal to be demodulated by the demodulator.
